# EUROPÄISCHE PATENTSCHRIFT

(11) **EP 1 309 160 B1**
(45) Veröffentlichungstag und Bekanntmachung des Hinweises auf die Patenterteilung: **06.05.2009**
(21) Anmeldenummer: 02023157.7
(22) Anmeldetag: 15.10.2002
(51) Int. Cl.: H04M 3/42, H04W 4/00, H04M 1/00, H04M 7/00, H04M 1/725

(54) **Mobiles Endgerät sowie Kommunikationssystem mit integriertem mobilen Endgerät**
Mobile terminal and communication system with integrated mobile terminal
Terminal mobile et système de communication avec terminal mobile integré

(30) Priorität: 31.10.2001 DE 10153747
(43) Veröffentlichungstag der Anmeldung: 07.05.2003
(73) Patentinhaber: SIEMENS AKTIENGESELLSCHAFT, 80333 München (DE)
(72) Erfinder: Feller, Siegfried, 81929 München (DE)

(56) Entgegenhaltungen:
- WO-A-01/31930
- US-A- 4 972 457
- US-A- 5 930 719
- US-A- 6 035 214
- US-A- 6 138 036

## Beschreibung

Die gegenwärtige Kommunikationstechnik stellt eine Vielzahl von Kommunikationsmöglichkeiten, insbesondere über leitungsvermittelte Festnetze, drahtlose Funknetze und paketorientierte Datennetze, wie z.B. lokale Netze (LAN: Local Area Network) oder Weitverkehrsnetze (WAN: Wide Area Network), bereit.

Zur Nutzung dieser vielfältigen Kommunikationsmöglichkeiten verwendet ein typischer Benutzer bisher meist separate Endgeräte. In der Regel sind dies ein mobiles Endgerät zur Anbindung an ein Funknetz, ein stationäres Telefonendgerät zur Anbindung an ein leitungsvermitteltes, im Allgemeinen öffentliches Telefonnetz, ein Personalcomputer zu Anbindung an ein paketorientiertes Datennetz und gegebenenfalls ein sog. IP-Telefon (IP: Internetprotokoll) zur paketbasierten Telefonie über ein Datennetz.

Die Verwendung jeweils separater Endgeräte erschwert jedoch eine endgeräteübergreifende Integration von Kommunikationsdiensten und bedingt zudem höhere Anschaffungskosten.

Aus der Druckschrift US6138036 ist ein drahtloses Endgerät zum Anschließen an einen Personal-Computer bekannt. Das drahtlose Endgerät erlaubt es, Voice-Mails aufzunehmen, die über einen angeschlossenen Personal-Computer als Email zu einem Empfänger verschickt werden. Eine flexiblere Nutzung und Steuerung von auf einem Personal-Computer verfügbaren Kommunikationsdiensten durch das drahtlose Endgerät ist jedoch nicht vorgesehen.

Weiterhin ist aus der Druckschrift US6035214 ein Laptop-Computer mit integriertem Telefon bekannt. Das integrierte Telefon ist hierbei direkt mit einer an eine Telefonleitung anschließbaren Modemkarte verbunden. Eine Steuerung von auf dem Laptop-Computer ablaufenden Kommunikationsapplikationen durch das integrierte Telefon ist jedoch wiederum nicht vorgesehen.

Es ist Aufgabe der vorliegenden Erfindung ein mobiles Endgerät sowie ein Kommunikationssystem anzugeben, die eine flexiblere Nutzung unterschiedlicher Kommunikationsnetze oder Kommunikationsdienste erlauben.

Gelöst wird diese Aufgabe durch ein mobiles Endgerät mit den Merkmalen des Patentanspruchs 1 sowie durch ein Kommunikationssystem mit den Merkmalen des Patentanspruchs 7.

Das erfindungsgemäße mobile Endgerät weist eine Kommunikationsschnittstelle zum Ankoppeln einer externen Computereinrichtung, z.B. eines Personalcomputers oder eines sogenannten Notebooks auf. Die Kommunikationsschnittstelle dient dabei zur Echtzeitübertragung von Kommunikationsdaten und/oder Kommunikationssignalen, z.B. Sprach-, Video- oder Multimediadaten bzw. -signalen zwischen der Computereinrichtung und einer Ein/Ausgabeeinrichtung des mobilen Endgerätes. Die Ein/Ausgabeeinrichtung kann beispielsweise ein Lautsprecher, ein Mikrophon oder eine andere Benutzerschnittstelle zur Ein/Ausgabe von Kommunikationsdaten und/oder Kommunikationssignalen sein.

Die Kommunikationsschnittstelle zur Echtzeitübertragung von Kommunikationsdaten und/oder Kommunikationssignalen zwischen dem mobilen Endgerät und der Computereinrichtung erlaubt eine Nutzung oder Steuerung von auf der Computereinrichtung verfügbaren Kommunikationsdiensten sowie von Kommunikationsdaten und/oder Kommunikationssignalen verarbeitenden Anwendungsprogrammen vom mobilen Endgerät aus.

Das mobile Endgerät weist weiterhin eine Datenschnittstelle zum Ankoppeln der externen Computereinrichtung und zum Übermitteln von Displayinformation, Tastaturinformation, Wahlinformation und Steuerinformation zwischen der Computereinrichtung und dem mobilen Endgerät auf.

Vorteilhafte Ausführungsformen und Weiterbildungen der Erfindung sind in den abhängigen Ansprüchen angegeben.

Vorzugsweise können die Datenschnittstelle und die Kommunikationsschnittstelle auf einer gemeinsamen Übertragungsschnittstelle, z.B. einer sogenannten USB-Schnittstelle (USB: Universal Serial Bus) basieren. Über die Datenschnittstelle kann Displayinformation von der Computereinrichtung zum mobilen Endgerät zur Anzeige auf dessen Display oder vom mobilen Endgerät zur Computereinrichtung zur Anzeige auf einer grafischen Benutzerschnittstelle der Computereinrichtung übermittelt werden. Ebenso kann eine von einer Tastatureingabe an mobilen Endgerät herrührende Tastaturinformation, Wahlinformation und/oder Steuerinformation über die Datenschnittstelle zur Computereinrichtung zum Steuern einer dort ablaufenden Kommunikationsanwendung übermittelt werden. Analog dazu kann eine von einer Tastatureingabe an der Computereinrichtung herrührende Tastaturinformation, Wahlinformation und/oder Steuerinformation von der Computereinrichtung über die Daten schnittstelle zum mobilen Endgerät zu Steuerungszwecken übermittelt werden. Darüber hinaus können über die Datenschnittstelle auch SMS-Daten (SMS: Short Message Service), Faxdaten oder sonstige Daten übermittelt werden.

Nach einer weiteren vorteilhaften Weiterbildung kann das mobile Endgerät eine mit der Funkschnittstelle und der Kommunikationsschnittstelle gekoppelte Übermittlungseinrichtung zum Übermitteln von Kommunikationsdaten zwischen der Computereinrichtung und dem Funknetz aufweisen. Auf diese Weise kann die Computereinrichtung über das mobile Endgerät mit dem Funknetz gekoppelt werden. Vorzugsweise kann auch die Datenschnittstelle mit der Übermittlungseinrichtung gekoppelt werden, um z.B. SMS-Daten, Faxdaten oder sonstige Daten zwischen der Computereinrichtung und dem Funknetz zu übermitteln.

Weiterhin kann das mobile Endgerät eine Netzschnittstelle zum Ankoppeln eines leitungsvermittelten Kommunikationsnetzes und zur Echtzeitübertragung von Kommunikationsdaten zwischen dem mobilen Endgerät und dem leitungsvermittelten Kommunikationsnetz aufweisen. Die Netzschnittstelle kann hierbei z.B. mittels eines sog. Control-Adapters, der in das mobile Endgerät integriert oder mit einer Steckkarte einsteckbar ist, realisiert sein. Die Netzschnittstelle kann vorzugsweise als ISDN-Schnittstelle ausgebildet sein.

Eine derartige Netzschnittstelle zum Ankoppeln eines leitungsvermittelten Kommunikationsnetzes kann auch bei der Computereinrichtung vorgesehen sein. In diesem Fall kann eine auf der Computereinrichtung ablaufende Kommunikationsanwendung ein Leitungsvermittlungsmodul zur Echtzeitübertragung von Kommunikationsdaten und/oder Kommunikationssignalen zwischen dem mobilen Endgerät und den leitungsvermittelten Kommunikationsnetz umfassen.

Weiterhin kann die Computereinrichtung eine Datenpaketschnittstelle, z.B. in Form einer sogenannten Ethernet-Netzwerkkarte zum Ankoppeln eines paketorientierten Kommunikationsnetzes, wie z.B. eines lokalen Netzes oder eines Weitverkehrsnetzes aufweisen. Eine auf der Computereinrichtung ablaufende Kommunikationsanwendung kann in diesem Fall ein Paketvermittlungsmodul, z.B. gemäß der ITU-T-Empfehlung H.323 umfassen zum Umsetzen von vom mobilen Endgerät stammenden Kommunikationsdaten und/oder Kommunikationssignalen in Datenpakete und zur Übertragung der Datenpakete in das paketorientierte Kommunikationsnetz.

Eine derartige Datenpaketschnittstelle zum Ankoppeln eines paketorientierten Kommunikationsnetzes kann auch in das mobile Endgerät integriert sein oder als ein dort einsteckbares Steckmodul realisiert sein.

Nach einer weiteren vorteilhaften Weiterbildung der Erfindung kann das mobile Endgerät eine Erfassungseinrichtung zum Erfassen eines Ankopplungszustandes des mobilen Endgerätes sowie eine Steuereinrichtung zum Vermitteln von abgehenden Kommunikationsverbindungen abhängig vom erfassten Ankopplungszustand aufweisen. Ein Ankopplungszustand gibt in diesem Zusammenhang an, ob über eine jeweilige Schnittstelle eine externe Einrichtung an das mobile Endgerät angekoppelt ist. Auf diese Weise kann abhängig vom erfassten Ankopplungszustand eine an eine externe Einrichtung angekoppelte Schnittstelle als diejenige Schnittstelle ausgewählt werden, über die eine abgehende Kommunikationsverbindung zu leiten ist. Damit können abgehende Kommunikationsverbindungen, solange an die Kommunikationsschnittstelle nichts angekoppelt ist, über die Funkschnittstelle ins Funknetz und nach Ankopplung der Computereinrichtung über die Kommunikationsschnittstelle zur Computereinrichtung vermittelt werden.

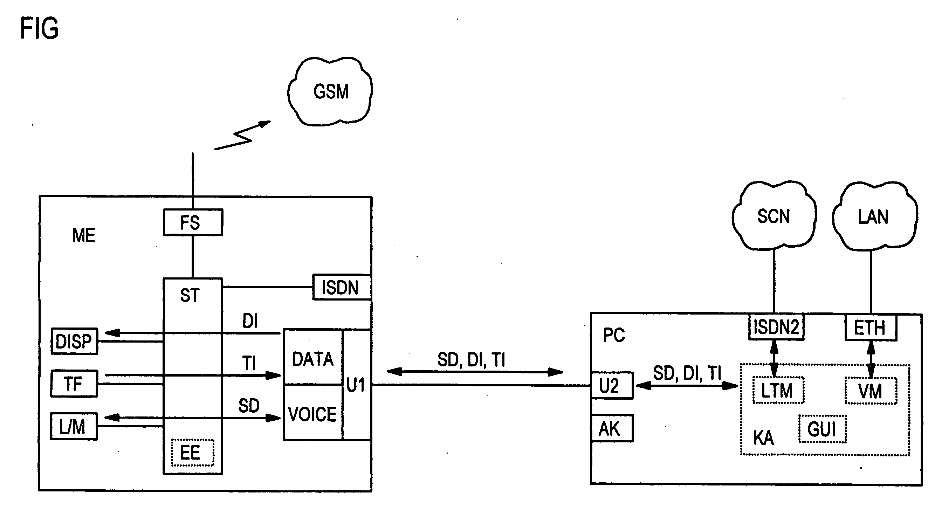

Ein Ausführungsbeispiel der Erfindung wird nachfolgend anhand der Zeichnung näher erläutert.

Die Figur zeigt ein Kommunikationssystem mit einem an einen Personalcomputer angekoppelten mobilen Endgerät in schematischer Darstellung.

In der Figur ist ein Kommunikationssystem mit einem mobilen Endgerät ME, beispielsweise einem GSM-Telefon (GSM: Global System for Mobile Communication), das an einen Personalcomputer PC angekoppelt ist, schematisch dargestellt. Der Personalcomputer PC ist hierbei vorzugsweise portabel, z.B. als sog. Notebook ausgeführt. Die Kopplung von mobilem Endgerät ME und Personalcomputer PC erfolgt über eine USB-Schnittstelle U1 (USB: Universal Serial Bus) des mobilen Endgerätes ME, die an eine USB-Schnittstelle U2 des Personalcomputers PC angekoppelt ist. Die USB-Schnittstellen U1 und U2 sind gängige Übertragungsschnittstellen zur seriellen Datenübertragung. Im vorliegenden Ausführungsbeispiel sind die USB-Schnittstellen U1 und U2 mittels eines einsteckbaren USB-Kabels verbunden. Alternativ zu den USB-Schnittstellen U1 und U2 können im mobilen Endgerät ME und im Personalcomputer PC Infrarotschnittstellen oder Kurzstreckenfunkmodule, wie z.B. sog. Bluetooth-Module, als Übertragungsschnittstellen vorgesehen sein.

Das mobile Endgerät ME weist eine Funkschnittstelle FS zur drahtlosen Ankopplung des mobilen Endgerätes ME an ein Funknetz GSM auf. Über das Funknetz GSM kann das mobile Endgerät ME beispielsweise an ein öffentliches Kommunikationsnetz oder an ein Weitverkehrsnetz (WAN: Wide Area Network), wie z.B. das Internet gekoppelt werden.

Als weitere Funktionskomponenten verfügt das mobile Endgerät ME über eine Lautsprecher/Mikrofon-Gruppe L/M als Ein/Ausgabeeinrichtung für Sprachtelefonie, ein Tastaturfeld TF sowie ein Display DISP. Weiterhin weist das mobile Endgerät ME eine Steuereinrichtung ST auf, an die die Funkschnittstelle FS, die Lautsprecher/Mikrofon-Gruppe L/M, das Tastaturfeld TF, sowie das Display DISP angekoppelt sind. Darüber hinaus sind an die Steuereinrichtung ST eine Kommunikationsschnittstelle VOICE zur Echtzeitübertragung von Kommunikationsdaten sowie eine Datenschnittstelle DATA zur Übertragung von sonstigen Daten angekoppelt. Im vorliegenden Ausführungsbeispiel ist die Kommunikationsschnittstelle VOICE als Sprachschnittstelle zur Echtzeitübertragung von Sprachdaten ausgebildet. Sowohl die Datenschnittstelle DATA als auch die Kommunikationsschnittstelle VOICE basieren auf der USB-Schnittstelle U1 als Übertragungsschnittstelle zum Personalcomputer PC. Analog dazu weist auch der Personalcomputer PC eine auf dessen USB-Schnittstelle U2 basierende Kommunikationsschnittstelle und Datenschnittstelle (nicht dargestellt) auf.

Optional verfügt das mobile Endgerät ME noch über eine an die Steuereinrichtung ST gekoppelte ISDN-Schnittstelle ISDN als Netzschnittstelle zur direkten Ankopplung des mobilen Endgeräts ME an ein leitungsvermitteltes ISDN-Kommunikationsnetz. Die optionale ISDN-Schnittstelle ISDN kann in das mobile Endgerät ME integriert sein oder als Steckkarte realisiert sein. Vorzugsweise wird durch die optionale ISDN-Schnittstelle ISDN, die z.B. mittels eines sogenannten Control-Adapters realisiert sein kann, ein leitungsorientiertes Endgerät emuliert.

Die Steuereinrichtung ST weist eine z.B. als Programmmodul implementierte Erfassungseinrichtung EE auf, durch die ein Ankopplungszustand des mobilen Endgeräts ME erfasst werden kann. Im vorliegenden Ausführungsbeispiel wird durch die Erfassungseinrichtung EE festgestellte, ob über die USB-Schnittstelle U1 ein funktionsfähiger Kontakt zu einem Personalcomputer, hier PC, hergestellt ist. Wenn ein solcher Kontakt durch die Erfassungseinrichtung EE festgestellt wird, veranlasst diese die Steuereinrichtung ST vom mobilen Endgerät ME abgehende Anrufe über die USB-Schnittstelle U1 zum angekoppelten Personalcomputer, hier PC, umzuleiten. Falls die Erfassungseinrichtung EE dagegen keinen solchen Kontakt zu einem Personalcomputer feststellt, werden vom mobilen Endgerät ME ausgehende Anrufe über die Funkschnittstelle FS ins Funknetz GSM weitergeleitet.

Der Personalcomputer PC verfügt über eine Netzwerkkarte ETH, z.B. eine sog. Ethernet-Karte als Datenpaketschnittstelle sowie über eine ISDN-Karte ISDN2 als Netzschnittstelle zum Ankoppeln eines leitungsvermittelten Kommunikationsnetzes. Im vorliegenden Ausführungsbeispiel ist der Personalcomputer PC über die Netzwerkkarte ETH an ein lokales Netz LAN und über die ISDN-Karte ISDN2 an ein leitungsvermitteltes Kommunikationsnetz SCN angekoppelt. Das lokale Netz LAN ist ein auf dem Internetprotokoll basierendes, paketorientiertes Kommunikationsnetz. Zum Aufbau von internetprotokollbasierten Kommunikationsverbindungen über das lokale Netz LAN ist zusätzlich ein auf dem Internetprotokoll basierendes Kommunikationsprotokoll, z.B. gemäß der ITU-T-Empfehlung H.323 implementiert. Als Kommunikationsverbindungen können in diesem Zusammenhang Echtzeitverbindungen z.B. zur Sprach-, Video- und/oder Multimediakommunikation aufgefasst werden. Derartige Verbindungen werden häufig auch als VoIP-Verbindungen (VoIP: Voice/Video over Internet Protocol) und die zugrunde liegenden paketorientierten Kommunikationsnetze, hier das lokale Netz LAN, als VoIP-Netze bezeichnet. Mittels des internetprotokollbasierten Kommunikationsprotokolls können Echtzeitverbindungen insbesondere zur Sprachkommunikation zwischen allen an das Lokale Netz LAN angekoppelten, VoIP-fähigen Endgeräten aufgebaut werden. Vorzugsweise ist das lokale Netz LAN an ein Weitverkehrsnetz (nicht dargestellt), wie z.B. das Internet angekoppelt, so dass VoIP-Verbindungen durch das Weitverkehrsnetz weitergeleitet werden können.

Auf dem Personalcomputer PC ist eine Kommunikationsanwendung KA, z.B. eine sogenannte CTI-Applikation (CTI: Computer Telefony Integration) implementiert. Die Kommunikationsanwendung KA verfügt über ein Leitungsvermittlungsmodul LTM zur Echtzeitübertragung von Kommunikationsdaten im Rahmen von Kommunikationsverbindungen zwischen dem Personalcomputer PC und dem leitungsvermitteltem Kommunikationsnetz SCM über die ISDN-Karte ISDN2. Weiterhin weist die Kommunikationsanwendung KA ein Paketvermittlungsmodul VM, z.B. ein VoIP-Modul gemäß der ITU-T-Empfehlung H.323 zur Echtzeitübertragung von Kommunikationsdaten in Form von Datenpaketen zwischen dem Personalcomputer PC und dem lokalen Netz LAN über die Netzwerkkarte ETH auf. Außerdem verfügt die Kommunikationsanwendung KA über eine grafische Benutzerschnittstelle GUI, über die die Kommunikationsanwendung KA vom Benutzer gesteuert werden kann.

Im vorliegenden Ausführungsbeispiel werden aufgrund der durch die Erfassungseinrichtung EE erkannten Ankopplung des Personalcomputers PC an das mobile Endgerät ME von diesem ausgehende Anrufe statt über die Funkschnittstelle FS über den Personalcomputer PC geleitet.

Ein Anruf wird am mobilen Endgerät ME durch eine Benutzereingabe am Tastaturfeld TF initiiert. Basierend auf der Benutzereingabe wird vom Tastaturfeld TF eine Tastaturinformation TI, z.B. eine Steuer und/oder Wahlinformation, über die Steuereinrichtung ST und die Datenschnittstelle DATA zur Kommunikationsanwendung KA des Personalcomputers PC übertragen. Infolgedessen veranlasst die Kommunikationsanwendung KA abhängig von der empfangenen Tastaturinformation TI einen Aufbau einer Kommunikationsverbindung über das Leitungsvermittlungsmodul LTM in das leitungsvermittelte Kommunikationsnetz SCN oder über das Paketvermittlungsmodul VM in das lokale Netz LAN, jeweils zu einem durch die Tastaturinformation TI identifizierten Verbindungsziel. Dabei werden Angaben über die aufzubauende Kommunikationsverbindung in Form einer Displayinformation DI von der Kommunikationsanwendung KA über die USB-Schnittstelle U2 zum mobilen Endgerät ME übertragen. Die Steuereinrichtung ST des mobilen Endgerätes ME empfängt die Displayinformation DI über die Datenschnittstelle DATA und übermittelt die Displayinformation DI dem Display DISP zur Anzeige. Vorzugsweise kann die Displayinformation DI auch auch über die grafische Benutzerschnittstelle GUI angezeigt werden.

Nach Aufbau der Kommunikationsverbindung werden in deren Rahmen in Echtzeit zu übermittelnde Sprachdaten SD zwischen der Lautsprecher/Mikrofon-Gruppe L/M und einem jeweiligen Verbindungsziel im leitungsvermittelten Kommunikationsnetz SCN bzw. im lokalen Netz LAN übertragen. Die Übertragung erfolgt über die Steuereinrichtung ST, die Kommunikationsschnittstelle VOICE, die USB-Schnittstellen U1 und U2, die Kommunikationsanwendung KA, sowie die ISDN-Karte ISDN2 bzw. die Netzwerkkarte ETH. Außer den Sprachdaten SD können auch andere Arten von Kommunikationsdaten, wie z.B. Video- und/oder Multimediadaten im Rahmen der Kommunikationsverbindung über die Kommunikationsschnittstelle VOICE zwischen dem mobilen Endgerät ME und dem Personalcomputer PC übertragen werden.

Aufgrund der erfindungsgemäßen Kopplung von mobilem Endgerät ME und Personalcomputer PC kann ein Steuern (Wählen, Abheben, Auflegen etc.) einer vom Personalcomputer PC verwalteten und vermittelten Verbindung auch - wie gewohnt - am mobilen Endgerät ME vorgenommen werden. Durch die Übertragung der Sprachdaten SD zwischen Personalcomputer PC und der Lautsprecher/Mikrofon-Gruppe L/M kann das mobile Endgerät gewissermaßen als Telefonhörer für den Personalcomputer PC genutzt werden. Die Verwendung des mobilen Endgerätes ME als Telefonhörer für den Personalcomputer PC hat gegenüber einer Verwendung einer im Personalcomputer PC eingebauten Lautsprecher/Mikrofon-Gruppe (nicht dargestellt) insbesondere den Vorteil, dass sich Umgebungsgeräusche beim Telefonieren wesentlich weniger störend auswirken.

Als einfachere Alternative zu einer Kopplung mittels der USB-Schnittstellen U1 und U2 kann das mobile Endgerät ME auch über ein Kabel mit einer Audiokarte AK des Personalcomputers verbunden werden. In diesem Fall können analoge Sprachsignale direkt zwischen der Lautsprecher/Mikrofon-Gruppe L/M und der Audiokarte AK übertragen werden. Die Audiokarte AK setzt dabei zwischen analogen Sprachdaten seitens der Lautsprecher/Mikrofon-Gruppe L/M und digitalen Sprachdaten seitens der Kommunikationsanwendung KH um

Die Kopplung zwischen mobilem Endgerät ME und Personalcomputer PC kann weiterhin auch dazu dienen, eine Kommunikationsund/oder Datenverbindung vom Personalcomputer PC ins Funknetz GSM und gegebenenfalls von dort ins Internet aufzubauen. Die zu übermittelnden Daten werden hierbei von der Steuereinrichtung ST zwischen der Funkschnittstelle FS und der Datenschnittstelle DATA bzw. der Kommunikationsschnittstelle VOICE vermittelt. Auf diese Weise können auch SMS-Daten, Fax-Daten oder sonstige Daten zwischen dem Funknetz GSM und dem Personalcomputer PC übertragen werden.

Durch die Erfindung wird ein Zugang sowohl zu einem Funknetz als auch zu einem leitungsvermittelten Kommunikationsnetz als auch zu einem paketvermittelten Kommunikationsnetz in ein einzelnes Endgerät, nämlich das erfindungsgemäße mobile Endgerät in Verbindung mit einem Personalcomputer integriert.

Solange das mobile Endgerät ME nicht an den Personalcomputer PC angekoppelt ist, kann mit dem mobilen Endgerät drahtlos über das Funknetz GSM telefoniert werden. Nach Anschluss an den Personalcomputer PC erlaubt das mobile Endgerät ME wahlweise sowohl stationäres Telefonieren über das leitungsvermittelte Kommunikationsnetz SCN als auch VoIP-Telefonie über das lokale Netz LAN. Zudem ermöglicht die Kopplung von mobilem Endgerät ME und Personalcomputer PC eine von stationären Kommunikationsnetzen unabhängige Ankopplung des Personalcomputers PC an das Funknetz GSM und über dieses an das Internet. Die erfindungsgemäße Kombination von mobilem Endgerät und Personalcomputer deckt demzufolge die wichtigsten Kommunikationsarten ab. Ein gegenwärtig noch übliches, stationäres Festnetztelefon ist somit eigentlich nicht mehr erforderlich.

## Patentansprüche

1. Mobiles Endgerät (ME) mit
- einer Funkschnittstelle (FS) zu einem Funknetz (GSM),
- einer Ein/Ausgabeeinrichtung (L/M),
- einer Kommunikationsschnittstelle (VOICE) zum Ankoppeln einer externen Computereinrichtung (PC) und zur Echtzeitübertragung von Kommunikationsdaten (SD) und/oder Kommunikationssignalen zwischen der Computereinrichtung (PC) und der Ein/Ausgabeeinrichtung (L/M) und mit
- einer Datenschnittstelle (DATA) zum Ankoppeln der externen Computereinrichtung (PC) und zum Übermitteln von Displayinformation (DI) zur Anzeige am mobilen Endgerät (ME) sowie von Tastaturinformation(TI), Wahlinformation und Steuerinformation zum Steuern einer auf der externen Computereinrichtung (PC) ablaufenden CTI-Applikation zwischen der Computereinrichtung (PC) und dem mobilen Endgerät (ME).

2. Mobiles Endgerät nach Anspruch 1,
**dadurch gekennzeichnet,**
**dass** die Datenschnittstelle (DATA) und die Kommunikationsschnittstelle (VOICE) auf einer gemeinsamen Übertragungsschnittstelle (U1) zum Ankoppeln der externen Computereinrichtung (PC) basieren.

3. Mobiles Endgerät nach einem der vorhergehenden Ansprüche,
**gekennzeichnet durch**
eine mit der Funkschnittstelle (FS) und der Kommunikationsschnittstelle (VOICE) gekoppelte Steuereinrichtung (ST) zum Übermitteln von Kommunikationsdaten (SD) zwischen der Computereinrichtung (PC) und dem Funknetz (GSM).

4. Mobiles Endgerät nach einem der vorhergehenden Ansprüche,
**gekennzeichnet durch**
eine Netzschnittstelle (ISDN) zum Ankoppeln eines leitungsvermittelten Kommunikationsnetzes (SCN) und zur Echtzeitübertragung von Kommunikationsdaten (SD) zwischen dem mobilen Endgerät (ME) und dem leitungsvermittelten Kommunikationsnetz (SCN).

5. Mobiles Endgerät nach einem der vorhergehenden Ansprüche,
**gekennzeichnet durch**
eine Erfassungseinrichtung (EE) zum Erfassen eines Ankopplungszustandes des mobilen Endgerätes (ME)
und eine Steuereinrichtung (ST) zum Vermitteln von abgehenden Kommunikationsverbindungen abhängig vom erfassten Ankopplungszustand.

6. Kommunikationssystem mit einem mobilen Endgerät (ME) nach einem der vorhergehenden Ansprüche,
**dadurch gekennzeichnet**
**dass** die Computereinrichtung (PC) eine Kommunikationsanwendung (KA) aufweist zum Vermitteln von Kommunikationsverbindungen und zur Echtzeitübertragung von im Rahmen der Kommunikationsverbindungen zu übermittelnden Kommunikationsdaten (SD) und/oder Kommunikationssignalen zwischen der Computereinrichtung (PC) und dem mobilen Endgerät (ME) über die Kommunikationsschnittstelle (VOICE).

7. Kommunikationssystem nach Anspruch 6,
**dadurch gekennzeichnet**
**dass** die Computereinrichtung (PC) eine Netzschnittstelle (ISDN2) zum Ankoppeln eines leitungsvermittelten Kommunikationsnetzes (SCN) aufweist, und
**dass** die Kommunikationsanwendung (KA) ein Leitungsvermittlungsmodul (LTM) zur Echtzeitübertragung von Kommunikationsdaten (SD) und/oder Kommunikationssignalen zwischen dem mobilen Endgerät (ME) und dem leitungsvermittelten Kommunikationsnetz (SCN) aufweist.

8. Kommunikationssystem nach Anspruch 6 oder 7,
**dadurch gekennzeichnet**
**dass** die Computereinrichtung (PC) eine Datenpaketschnittstelle (ETH) zum Ankoppeln eines paketorientierten Kommunikationsnetzes (LAN) aufweist, und
**dass** die Kommunikationsanwendung (KA) ein Paketvermittlungsmodul (VM) zum Umsetzen von vom mobilen Endgerät (ME) stammenden Kommunikationsdaten (SD) und/oder Kommunikationssignalen in Datenpakete und zur Übertragung der Datenpakete in das paketorientierte Kommunikationsnetz (LAN) aufweist.

## Claims

1. Mobile terminal (ME) with
- a radio interface (FS) to a radio network (GSM),
- an input/output device (L/M),
- a communication interface (VOICE) for connecting an external computer device (PC) and for real-time transmission of communication data (SD) and/or communication signals between the computer device (PC) and the input/output device (L/M) and with
- a data interface (DATA) for connecting the external computer device (PC) and for transmitting display information (DI) for display at the mobile terminal (ME) as well as keyboard information (TI), dial information and control information for control of a CTI application running on the external computer device (PC) between the computer device (PC) and the mobile terminal (ME).

2. Mobile terminal according to claim 1,
**characterised in that**
the data interface (DATA) and the communication interface (VOICE) are based on a common transmission interface (U1) for connecting the external computer device (PC).

3. Mobile terminal according to one of the previous claims,
**characterised by**
a control device (ST) connected to the radio interface (FS) and the communication interface (VOICE) for transmitting communication data (SD) between the computer device (PC) and the radio network (GSM).

4. Mobile terminal according to one of the previous claims,
**characterised by**
a network interface (ISDN) for connecting a circuit-switched communication network (SCN) and for real-time transmission of communication data (SD) between the mobile terminal (ME) and the circuit-switched communication network (SCN).

5. Mobile terminal according to one of the previous claims,
**characterised by**
a detection device (EE) for detecting a connection state of the mobile terminal (ME)
and a control device (ST) for determining outgoing communication connections depending on the connection state detected.

6. Communication system with a mobile terminal (ME) according to one of the previous claims,
**characterised in that**
the computer device (PC) has a communication application (KA) for determining communication connections and for real-time transmission of communication data (SD) to be transmitted within the framework of the communication connection and/or communication signals between the computer device (PC) and the mobile terminal (ME) via the communication interface (VOICE).

7. Communication system according to claim 6,
**characterised in that**
the computer device (PC) features a network interface (ISDN2) for connecting a circuit-switched communication network (SCN), and
the communication application (KA) features a circuit switching module (LTM) for real-time transmission of communication data (SD) and/or communication signals between the mobile terminal (ME) and the circuit-switched communication network (SCN).

8. Communication system according to claim 6 or 7,
**characterised in that**
the computer device (PC) features a data packet interface (ETH) for connection of a packet-oriented communication network (LAN), and
the communication application (KA) features a packet switching module (VM) for conversion of communication data (SD) originating from the mobile terminal (ME) and/or communication signals into data packets and for transmitting the data packets into the packet-oriented communication network (LAN).

## Revendications

1. Terminal mobile (ME) comprenant
- une interface radio (FS) avec un réseau radio (GSM),
- un dispositif d'entrée/sortie (L/M),
- une interface de communication (VOICE) pour l'insertion d'un dispositif informatique (PC) externe et pour la transmission en temps réel des données de communication (SD) et/ou de signaux de communications entre le dispositif informatique (PC) et le dispositif d'entrée/sortie (L/M) et
- une interface de données (DATA) pour l'insertion du dispositif informatique (PC) externe et pour la transmission d'informations visualisées (DI) pour l'affichage sur le terminal mobile (ME) et d'information de clavier (TI), d'information de sélection et d'information de commande pour la commande d'une application CTI se déroulant sur le dispositif informatique (PC) externe entre le dispositif informatique (PC) et le terminal (ME) mobile.

2. Terminal mobile selon la revendication 1,
**caractérisé en ce que**
l'interface de données (DATA) et l'interface de communication (VOICE) sont basées sur une interface de transmission (UI) commune pour l'insertion du dispositif informatique (PC) externe.

3. Terminal mobile selon l'une quelconque des revendications précédentes,
**caractérisé par**
un dispositif de commande (ST) couplé avec l'interface radio (FS) et l'interface de communication (VOICE) pour la transmission de données de communication (SD) entre le dispositif informatique (PC) et le réseau radio (GSM).

4. Terminal mobile selon l'une quelconque des revendications précédentes,
**caractérisé par**
une interface de réseau (ISDN) pour l'insertion d'un réseau de communication à commutation de circuits (SCN) et pour la transmission en temps réel de données de communication (SD) entre le terminal mobile (ME) et le réseau de communication à commutation de circuits (SCN).

5. Terminal mobile selon l'une quelconque des revendications précédentes,
**caractérisé par**
un dispositif d'enregistrement (EE) pour l'enregistrement d'un état d'insertion du terminal mobile (ME)
et un dispositif de commande (ST) pour la transmission de liaisons de communication sortant en fonction de l'état d'insertion enregistré.

6. Système de communication comprenant un terminal mobile (ME) selon l'une quelconque des revendications précédentes,
**caractérisé en ce que**
le dispositif informatique (PC) présente une application de communication (KA) pour la commutation de liaisons de communication et pour la transmission en temps réel de données de communication (SD) et/ou signaux de communication à transmettre dans le cadre des liaisons de communication entre le dispositif informatique (PC) et le terminal (ME) mobile par l'intermédiaire de l'interface de communication (VOICE).

7. Système de communication selon la revendication 6,
**caractérisé en ce que**
le dispositif informatique (PC) présente une interface de réseau (ISDN2) pour l'insertion d'un réseau de communication à commutation de circuits (SCN), et
**en ce que** l'application de communication (KA) présente un module de commutation de circuits (LTM) pour la transmission en temps réel de données de communication (SD) et/ou de signaux de communication entre le terminal mobile (ME) et le réseau de communication à commutation de circuits (SCN).

8. Système de communication selon la revendication 6 ou 7,
**caractérisé en ce que**
le dispositif informatique (PC) présente une interface de paquet de données (ETH) pour l'insertion d'un réseau de communication (LAN) orienté paquets, et
**en ce que** l'application de communication (KA) présente un module de commutation par paquets (VM) pour la conversion de données de communication (SD) et/ou signaux de communication provenant du terminal mobile (ME) en paquet de données et pour la transmission des paquets de données dans le réseau de communication (LAN) orienté paquets.
